# EUROPEAN PATENT APPLICATION

(11) **EP 3 127 810 A1**
(43) Date of publication of application: **08.02.2017**
(21) Application number: 14887777.2
(22) Date of filing: 20.08.2014
(51) Int. Cl.: B64D 11/02

(54) **AIRCRAFT LAVATORY UNIT**

(30) Priority: 31.03.2014 JP 2014072685
(71) Applicant: JAMCO CORPORATION, Mitaka-shi, Tokyo 181-8571 (JP)
(72) Inventor: OOI, Kouichi, Mitaka-shi Tokyo 181-8571 (JP); TSUTSUI, Yoshihisa, Mitaka-shi Tokyo 181-8571 (JP)
(74) Representative: Novaimo
(86) International application number: PCT/JP2014/071748
(87) International publication number: WO 2015/151308

(57) **Abstract**

A lavatory unit (100) disposed in a passenger cabin of an aircraft has a box-shaped main body (105) configured from panels. A bottom of the main body (105) has a rectangular shape formed with short sides and long sides, and a door is provided on one short side. A toilet unit (110) is installed on the other short side opposite the door. A foldable sink (200) is mounted above the toilet unit (110). Since the sink, which would typically have been provided on a panel on the long-side, is made foldable and mounted above the toilet unit, the width (W₂) of the lavatory unit can be reduced.

## Description

### [Technical Field]

The present invention relates to a lavatory unit disposed in a passenger cabin of an aircraft.

### [Background Art]

A lavatory unit disposed in a passenger cabin of an aircraft has a structure where a bottom surface having a planar shape is surrounded by rectangular box-shaped panels. A lavatory unit disposed at a center area of the passenger cabin has a housing formed of flat panels, but a lavatory unit disposed at a window side of the passenger cabin has a panel disposed on the window side formed in the shape of a curved surface matching a side wall shape of a body of the aircraft.

### [Citation List]

### [Patent Literature]

[PTL 1] Japanese Unexamined Patent Application Publication No. 2002-154489
[PTL 2] Japanese Unexamined Patent Application Publication No. 2004-203167

### [Summary of Invention]

### [Technical Problem]

In order to arrange a greater number of seats within the passenger cabin and improve efficiency, a floor space that the lavatory unit occupies must be downsized.

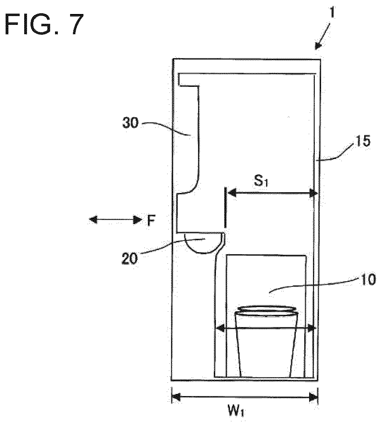

FIG. 7 is a front view of a general arrangement of a prior art lavatory unit.

A lavatory unit 1 includes a main body 15 formed of a lightweight panel with a honeycomb structure. A door is provided on a front side of the drawing, and a toilet unit 10 is installed on a depth side. A sink, i.e., wash basin, 20 is attached to a side wall on an inner side of the main body 15. A space S₁ is required for the user to use the sink 20.

An arrow F of FIG. 7 shows an axis direction of the aircraft. A main passage of the passenger cabin is formed along this axis. If the door of the lavatory unit is disposed to face this main passage, a width dimension W₁ of the lavatory unit 1 is set as a length dimension in the axis F direction.

The object of the present invention is to provide a lavatory unit of an aircraft capable of reducing a width dimension of the lavatory unit while ensuring usability, which is effective in increasing the number of passenger seats.

### [Solution to Problem]

In order to achieve the above-described objects, the lavatory unit provided in a passenger cabin of an aircraft includes, as basic means, a box-shaped main body formed of panels and having a bottom surface with a rectangular shape having short sides and long sides, a door provided on one of the short sides of the main body, a toilet unit provided on the other one of the short sides opposed to the door, and a foldable sink provided on an upper portion of the toilet unit.

Further, the main body of the lavatory unit is characterized in that it has the short sides of the bottom surface arranged in parallel with an axis of the aircraft.

### [Advantageous Effects of Invention]

The lavatory unit according to the present invention having the configuration illustrated above does not require any space for installing a sink on the side wall, so that a dimension of the lavatory unit in the axial direction of the body of the aircraft can be reduced. Therefore, the number of seats arranged in the passenger cabin can be increased, and the operating efficiency can be improved.

### [Brief Description of Drawings]

[FIG. 1] FIG. 1 is a perspective view of a lavatory unit according to a present invention, showing a state where a foldable sink is opened.
[FIG. 2] FIG. 2 is a front view of the lavatory unit according to the present invention.
[FIG. 3] FIG. 3 is a side view of the lavatory unit according to the present invention.
[FIG. 4] FIG. 4 is a perspective view of the lavatory unit according to the present invention, showing a state where the foldable sink is opened.
[FIG. 5] FIG. 5 is a perspective view of the lavatory unit according to the present invention, showing a state where the foldable sink is closed.
[FIG. 6] FIG. 6 is a detailed view of the foldable sink in the lavatory unit according to the present invention.
[FIG. 7] FIG. 7 is a front view of a lavatory unit according to a prior art.

### [Description of Embodiments]

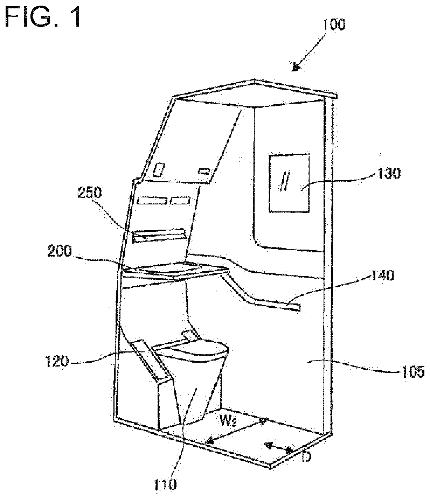

FIG. 1 is a perspective view illustrating a relevant portion of a lavatory unit according to the present invention. A lavatory unit 100 has a box-shaped main body 105 formed of panels and a bottom surface having a rectangular shape with short sides and long sides, and a toilet unit 110 disposed within the main body 105. An arrow D in the drawing illustrates a flow line of a passenger entering and exiting the lavatory unit. An appropriate door, such as a folding door, is attached to an opening portion of the lavatory unit 100. Necessary interior equipment such as a dust bin 120, a mirror 130 and a handrail 140 are provided in the main body 105.

The toilet unit 110 is disposed at a depth side of the main body 105 opposed to the door. A foldable sink 200 is attached to an upper portion of the toilet unit 110. FIG. 1 shows the foldable sink 200 in the opened state, and the passenger can use the sink in this state.

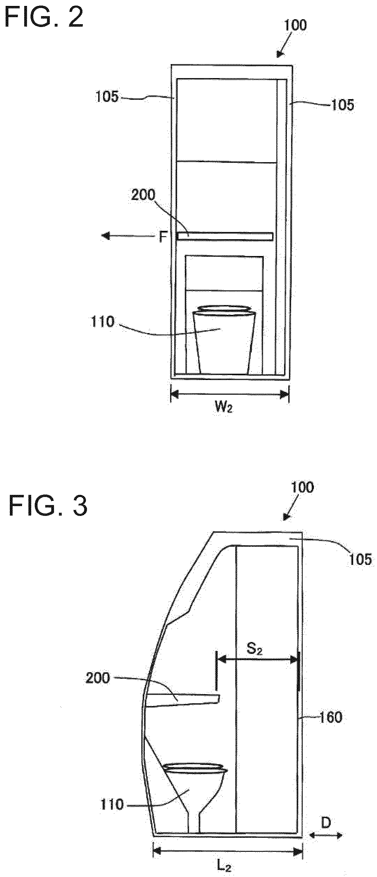

FIG. 2 is a front view of the lavatory unit 100 according to the present invention, and FIG. 3 is a side view of the lavatory unit 100 according to the present invention.

The main body 105 of the lavatory unit 100 has a rectangular shape with the planar shape of the bottom surface formed of short sides with a width dimension W₂ and long sides with a depth dimension L₂. An entrance D is formed on one of the short sides, and a door 160 is mounted thereto. The toilet unit 110 is disposed on the depth side of the main body 105 at a short side opposed to the door 160.

The foldable sink 200 is mounted to an upper portion of the toilet unit 110.

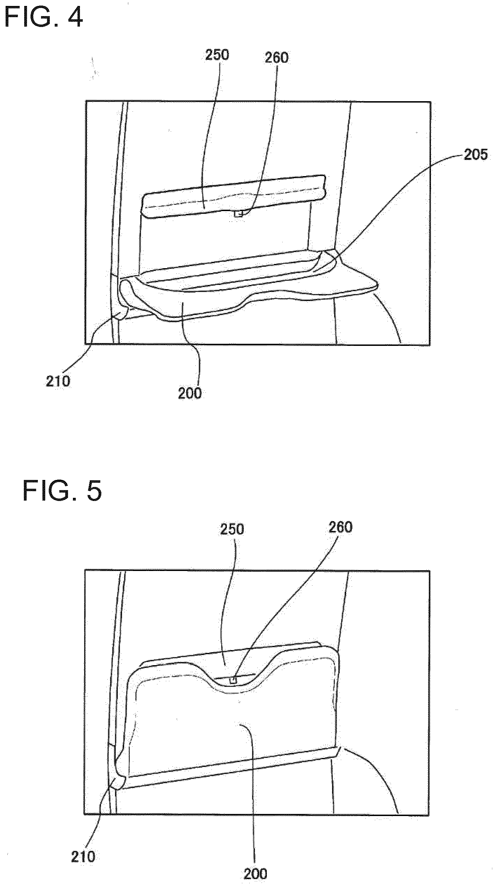

FIG. 4 is a perspective view of a state where the foldable sink of the lavatory unit according to the present invention is opened. The foldable sink 200 has a sink portion 205, and the sink portion 205 is supported pivotably via a hinge 210. A faucet 260 and a lighting 250 are disposed above the sink 200.

FIG. 5 is a perspective view of a state where the foldable sink of the lavatory unit of the present invention is closed.

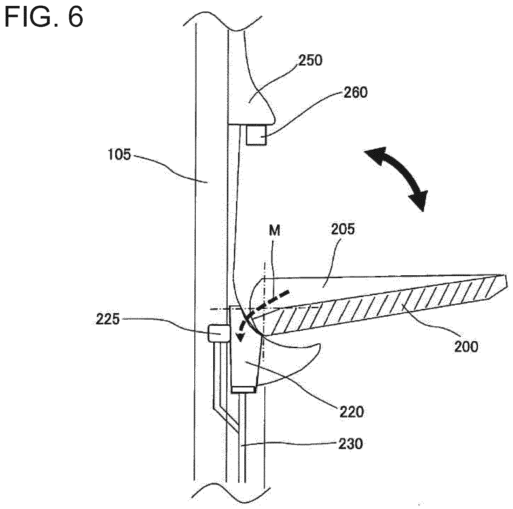

FIG. 6 is a detailed view of the foldable sink of the lavatory unit according to the present invention.

A sump sink 220 is provided at a mounting portion of the foldable sink 200. The sump sink 220 is connected to a bottom surface of the sink portion 205, and receives a water M accumulated in the sink portion 205. The water received by the sump sink 220 is discharged through a drain hose 230 connected to the lower end of the sump sink 220.

An overflow drain 225 is provided on the sump sink 220. When a water level of water pooled in the sump sink 220 reaches a plane of the drain 225, the water is discharged through the overflow drain 225 to the drain hose 230.

The lavatory unit 100 according to the present invention has the foldable sink 200 disposed in a space at the upper portion of the toilet unit 110, so that the sink 200 can be folded to form a wide space in the height direction of the lavatory unit 100 during use of the toilet unit, so that a user will not feel any inconvenience when using the toilet both in a sitting position and in a standing position. Further, the foldable sink 200 can be expanded when using the sink, so that the sink can be used in the space at the upper portion of the toilet unit 110.

Since the foldable sink 200 is arranged in a space above the toilet unit 110, which is an available space at a height direction in the lavatory unit 100, it becomes possible to prevent interference between the sink and the user of the toilet unit 110, so that a width dimension W₂ in an axis F direction of the toilet unit 110 can be reduced.

According to the configuration described above, a number of rows of passenger seats arranged in the axis direction F can be increased, and an operating efficiency of the aircraft can be improved.

### [Reference Signs List]

- 100: Lavatory unit
- 105: Main body
- 110: Toilet unit
- 120: Dust bin
- 130: Mirror
- 140: Handrail
- 160: Door
- 200: Foldable sink
- 250: Lighting
- 260: Faucet

## Claims

1. A lavatory unit provided in a passenger cabin of an aircraft, comprising:
a box-shaped main body formed of panels, and comprising a bottom surface having a rectangular shape with short sides and long sides;
a door provided on one of the short sides of the main body;
a toilet unit provided on the other one of the short sides opposed to the door;
and
a foldable sink provided on an upper portion of the toilet unit.

2. The lavatory unit provided in a passenger cabin of an aircraft according to claim 1,
wherein the main body of the lavatory unit has the short sides of the bottom surface arranged in parallel with an axis of the aircraft.
